# EUROPÄISCHE PATENTSCHRIFT

(11) **EP 1 826 965 B1**
(45) Veröffentlichungstag und Bekanntmachung des Hinweises auf die Patenterteilung: **20.08.2008**
(21) Anmeldenummer: 06003850.2
(22) Anmeldetag: 24.02.2006
(51) Int. Cl.: H04L 12/58

(54) **Nachrichtenserver und Verfahren zur Benachrichtigung eines Benutzers über den Eingang einer elektronischen Nachricht**
Message server and method for the notification of a user with respect to the reception of an electronic message
Serveur de messages et procédé pour la notification d'un utilisateur concernant la réception d'un message électronique

(43) Veröffentlichungstag der Anmeldung: 29.08.2007
(73) Patentinhaber: Cycos Aktiengesellschaft, 52477 Alsdorf (DE)
(72) Erfinder: Zegers, John, 6464 CZ Kerkrade (NL)
(74) Vertreter: Maier, Daniel Oliver

(56) Entgegenhaltungen:
- EP-A- 1 519 287
- WO-A-20/05106847
- US-A1- 2002 178 218

## Beschreibung

Die Erfindung betrifft einen Nachrichtenserver zur Verarbeitung ausgehender und eingehender elektronischer Nachrichten gemäß des Oberbegriffs des Patentanspruchs 1, und ein Verfahren zur Benachrichtigung eines Benutzers über den Eingang einer elektronischen Nachricht gemäß des Oberbegriffs des Patentanspruchs 14.

Für die elektronische Kommunikation werden häufig Medien und Nachrichten-Typen eingesetzt, die in einem dem jeweiligen Empfänger zugeordneten Speicher abgelegt bzw. zwischengespeichert werden und von diesem Empfänger bei Zugriff auf den jeweiligen Speicher abgerufen werden. So ist es beispielsweise üblich, dass Benutzer eines E-Mail-Dienstes von Zeit zu Zeit mittels eines elektronischen Kommunikationsgerätes (PC, PDA, Mobiltelefon o.ä.) eine Verbindung zu einem entsprechenden Nachrichtenserver (E-Mail-Server, Unified-Messaging-System o.ä.) aufbauen, um festzustellen, ob neue elektronische Nachrichten eingegangen sind und zwischengespeichert wurden. Das betrifft neben den E-Mail-Nachrichten in ähnlicher Weise auch Telefax-Nachrichten, die in entsprechenden Telefax-Servern oder Unified-Messaging-Servern zwischengespeichert werden, und andere elektronische Nachrichten.

Der regelmäßige Zugriff auf einen Nachrichtenserver zum Zwecke der Kontrolle, ob gegebenenfalls eine neue Nachricht vorliegt, ist oft lästig und zeitraubend. Das gilt umso mehr in den Fällen, in denen ein Benutzer dringend auf das Eintreffen einer Nachricht wartet, so dass er gezwungen ist, in sehr kurzen Zeitabständen und damit entsprechend häufig die Kontrolle vorzunehmen.

Um dem abzuhelfen, ist es beispielsweise für die Unified-Messaging-Systeme bekannt, den entsprechenden Benutzer (Empfänger einer elektronischen Nachricht) jeweils automatisch zu benachrichtigen, sobald eine neue Nachricht für ihn vorliegt. Dazu weisen solche Server beispielsweise eine Einrichtung auf, die einen automatisch generierten Telefonanruf zu einer zuvor von dem Benutzer eingegebenen Rufnummer tätigen. Der Benutzer wird dann beispielsweise mittels einer synthetisch erzeugten Sprachausgabe über den Eingang einer neuen elektronischer Nachricht informiert. Dieses Verfahren wird in der Literatur häufig auch als "User Outcall" bezeichnet.

Analog zu dem beschriebenen Verfahren des "User Outcalls" sind bekannte Nachrichtenserver auch in der Lage, eine entsprechende Benachrichtigung mittels einer Kurznachricht (SMS-Nachricht; SMS = Short Message Service) über ein Mobilfunknetz durchzuführen.

Obwohl die bekannten Verfahren zur Benachrichtigung bereits sehr gut in der Lage sind, Benutzer zuverlässig und zeitnah über eingehende elektronische Nachrichten zu informieren, hat sich als nachteilig erwiesen, dass besonders in den Fällen, in denen ein Benutzer sehr viele elektronische Nachrichten zugestellt bekommt, auch eine dementsprechende Vielzahl von Benachrichtigungsmeldungen versendet werden, was oft als störend empfunden wird.

Ein solches Verfahren wird beispielsweise in der Patentschrift EP-1 519 287 (A1) offenbart.

Es ist also eine Aufgabe der vorliegenden Erfindung, den Komfort bei der Benachrichtigung über eingehende elektronische Nachrichten zu verbessern.

Die Aufgabe wird durch ein Nachrichtenserver gemäß des Patentanspruchs 1 und durch ein Verfahren gemäß des Patentanspruchs 14 gelöst.

Die Lösung sieht den Einsatz eines Nachrichtenservers zur Verarbeitung ausgehender und eingehender elektronischer Nachrichten vor, mit einer Sendeeinrichtung zum Versenden der elektronischen Nachrichten, mit einer Empfangseinrichtung zum Empfangen der elektronischen Nachrichten, und mit einer Benachrichtigungseinrichtung vom Versenden einer Benachrichtigungsmeldung über den Empfang der elektronischen Nachrichten. Dabei weist der Nachrichtenserver ein Zuordnungsmittel zur Zuordnung eines Auftrages zu einer versendeten oder zur versendenden elektronischen Nachricht auf, wobei durch den Auftrag das Versenden der Benachrichtigung beim Empfang einer eingehenden Antwortnachricht zu dieser versendeten elektronischen Nachricht vorsehbar ist. Der Nachrichtenserver umfasst weiter eine Überprüfungseinrichtung, die zur Überprüfung der eingehenden elektronischen Nachricht eingerichtet ist, wobei durch die Überprüfung feststellbar ist, ob eine eingehende elektronische Nachricht eine Antwortnachricht auf eine zuvor versendete und mit einem Auftrag versehene elektronische Nachricht ist. Dabei ist der Nachrichtenserver so eingerichtet, dass im Fall eines positiven Ergebnisses der Überprüfung ein Versenden der Benachrichtigungsmeldung erfolgt. Durch den Einsatz eines solchen Nachrichtenservers kann das Versenden einer Benachrichtigungsmeldung auf solche Fälle beschränkt werden, bei denen die eingehende Nachricht eine Antwortnachricht auf ausgewählte versendete Nachrichten ist. Somit kann für eine versendete bzw. zu versendende elektronische Nachricht festgelegt werden, ob eine Benachrichtigungsmeldung gesendet wird, wenn auf diese - zum Beispiel wichtige - elektronische Nachricht eine Antwort eintrifft. Durch eine solche selektive Benachrichtigung kann von dem Erfordernis abgesehen werden, über jegliche eingehende elektronische Nachricht informiert zu werden, ohne eine wichtige Antwort-Nachricht zu verpassen.

Die Aufgabe wird weiter durch ein Verfahren zur Benachrichtigung eines Benutzers über den Eingang einer elektronischen Nachricht gelöst, wobei bei Eingang der elektronischen Nachricht eine Benachrichtigungsmeldung an den Benutzer versendet wird. Dazu wird in einem ersten Schritt eine elektronische Nachricht erstellt, in einem zweiten Schritt der erstellten elektronischen Nachricht ein Auftrag zur Benachrichtigung über eine zukünftig eingehende Antwort-Nachricht zugeordnet, und in einem dritten Schritt die elektronische Nachricht versendet. Danach wird in einem vierten Schritt eine weitere elektronische Nachricht empfangen, wobei in einem fünften Schritt für diese empfangene weitere elektronische Nachricht überprüft wird, ob diese eine Antwortnachricht zu der versendeten und mit dem Auftrag versehenen Nachricht ist, wobei in einem sechsten Schritt bei einem positiven Überprüfungsergebnis des fünften Schritts eine dem Auftrag entsprechende Benachrichtigung versendet wird. Dabei kann beispielsweise auch der dritte Schritt vor dem zweiten Schritt erfolgen. Durch den Einsatz dieses Verfahrens kann für jede versendete elektronische Nachricht spezifiziert werden, ob bei eingehenden Antwort-Nachrichten zu diesen versendeten bzw. zu versendenden elektronischen Nachrichten eine Benachrichtigung erfolgen soll. Damit wird die Anzahl der zu versendenden Benachrichtigungsmeldungen verringert, ohne eine Antwortnachricht zu einer zuvor versendeten und entsprechend gekennzeichneten (z.B. wichtigen) elektronischen Nachricht zu verpassen.

Vorteilhafte Ausgestaltungen des erfindungsgemäßen Nachrichtenservers sind in den abhängigen Patentansprüchen angegeben. Die dabei beschriebenen Merkmale und Vorteile gelten sinngemäß auch für das erfindungsgemäße Verfahren.

Wenn die elektronische Nachricht eine E-Mail-Nachricht ist, kann auf besonders sichere Weise festgestellt werden, ob eine eingehende elektronische Nachricht eine Antwortnachricht auf diese E-Mail-Nachricht ist. Für die Feststellung, ob die eingehende elektronische Nachricht eine Antwortnachricht auf eine zuvor versendete elektronische Nachricht ist, ist die Überprüfungseinrichtung vorteilhaft zum Vergleich zumindest eines Teils der Betreffzeile der versendeten elektronische Nachricht mit zumindest einem Teil der Betreffzeile der Antwortnachricht eingerichtet. Das ist von Vorteil, weil sich herausgestellt hat, dass die Antwortnachrichten auf versendete E-Mail-Nachrichten häufig die gleiche Betreffzeile aufweisen, gegebenenfalls um einen Vermerk wie "Antwort:" oder "AW:" erweitert. Telefax-Nachrichten in Unified-Messaging-Systemen werden häufig mit einer Betreffzeile gespeichert bzw. verwaltet, die bei ausgehenden Nachrichten die Rufnummer des Empfängers betreffen und bei eingehenden Telefax-Nachrichten die Rufnummer des Absenders betreffen. Diese Rufnummern sind bei Antwort-Nachrichten häufig identisch zu den gesendeten Nachrichten.

Alternativ oder zusätzlich ist die Überprüfungseinrichtung vorteilhaft zum Vergleich zumindest eines Adressaten der versendeten elektronischen Nachricht mit einer Absenderangabe der empfangenden elektronischen Nachricht eingerichtet, wodurch ebenso darauf geschlossen werden kann, ob eine empfangende elektronische Nachricht eine Antwortnachricht ist, oder nicht.

Eine weitere vorteilhafte Methode für die Überprüfung, ob eine eingehende elektronische Nachricht eine Antwortnachricht ist, kann eingesetzt werden, wenn die Überprüfungseinrichtung zum Vergleich zumindest eines Teils eines Textkörpers der versendeten elektronischen Nachricht mit zumindest einem Teil eines Textkörpers der empfangenen elektronischen Nachricht ausgebildet ist. Dabei macht man sich im Beispiel der E-Mail-Nachrichten zu Nutze, dass Antwortnachrichten auf E-Mail-Nachrichten häufig eine Kopie des ursprünglich gesendeten Textes umfassen. Darüber hinaus sind elektronische Nachrichten häufig mit eindeutigen Identifikationsnummern versehen, die üblicher Weise von einem versendenden Nachrichten-Server in einen sog. "Header" (oft auch als Internet-Kopfzeilen bezeichnet) eingefügt werden. Sofern diese Identifikationsnummern bei dem Erzeugen einer Antwort in die Antwortnachricht übernommen werden, sind diese ein Teil des Textkörpers, der zwar i.a. nicht angezeigt wird, aber eine sehr gute Entscheidungsgrundlage für die Überprüfung darstellt.

Vorteilhaft können alle beschriebenen Vergleichs-Verfahren miteinander kombiniert werden, wobei die Ergebnisse der einzelnen Prüfschritte aufsummiert werden können. Übersteigt diese Summe einen vorher festgelegten Wert, so wird vom Vorliegen einer Antwort-Nachricht ausgegangen.

Die Art der Benachrichtigung (Benachrichtigungs-Medium, Kommunikationsadresse für die Benachrichtigung) kann für jede versendete elektronische Nachricht bzw. der dieser zuzuordnenden Antwort-Nachrichten separat voreingestellt werden, indem der der versendeten elektronischen Nachricht zugeordnete Auftrag eine Angabe über die Art der Benachrichtigung und/oder eine Ziel-Kommunikationsadresse für die Benachrichtigung umfasst.

Es ist von Vorteil, wenn als die Benachrichtigungsmeldung eine elektronische Echtzeit-Nachricht, beispielsweise eine Telefonanruf oder eine SMS-Nachricht, verwendet wird. Dadurch ist eine zeitnahe Benachrichtigung des Benutzers gewährleistet.

Eine gute Erreichbarkeit der zu benachrichtigenden Person kann erreicht werden, indem die Benachrichtigungseinrichtung zur Erzeugung eines automatischen Telefonanrufs an einen Benutzer als Benachrichtigungsmeldung eingerichtet ist. Dagegen wird eine Benachrichtigung häufig als weniger störend empfunden, wenn die Benachrichtigungseinrichtung zur Erzeugung und zum Versenden einer textbasierten Nachricht als Benachrichtigungsmeldung eingerichtet ist. Dabei ist die textbasierte Nachricht eine SMS-Nachricht oder eine E-Mail-Nachricht. Im Falle der SMS-Nachricht kann der Benutzer zeitnah über sein Mobiltelefon oder ein anderes "SMS-fähiges" Telefon erreicht werden, wogegen beim Einsatz einer E-Mail-Nachricht die Benachrichtigung zu einer weiteren E-Mail-Adresse des Benutzers oder eines anderen Benutzers erfolgen kann, ohne dass zugleich die komplette eingegangene Antwort-Nachricht weitergeleitet werden muss, wie das bei der bekannten Weiterleitungs-Funktion von gängigen E-Mail-Programmen der Fall ist. Dabei kann gewünscht sein, dass ein Benutzer nicht nur über die bloße Tatsache, dass eine Antwortnachricht eingegangen ist, informiert wird, sondern auch weitergehende Informationen über die Antwortnachricht erhält. Dazu ist es vorteilhaft, wenn die Benachrichtigungsmeldung zumindest einen Teil einer Betreffzeile und/oder eines Textkörpers der Antwort-Nachricht umfasst.

Eine besonders flexible Handhabung der Benachrichtigungen ergibt sich, wenn das Zuordnungsmittel zur Zuordnung und/oder zur Änderung des Auftrages vor der Versendung, während des Versendens und/oder nach dem Versenden der versendeten Nachricht eingerichtet ist. Dazu kann ein Benutzer jederzeit, also auch nach dem Versenden der Nachricht, seinen Benachrichtigungs-Wunsch eingeben, ändern oder stornieren. Das ist besonders vorteilhaft, wenn der Nachrichtenserver ein E-Mail-Server oder ein Unified-Messaging-System ist, weil ein Benutzer somit Aufträge für die Benachrichtigung für seine meist genutzten Kommunikationswege einstellen kann.

Ausführungsbeispiele eines erfindungsgemäßen Nachrichtenservers werden nachfolgend anhand der Zeichnungen erläutert. Sie dienen gleichzeitig der Erläuterung eines Ausführungsbeispiels für das erfindungsgemäße Verfahren.

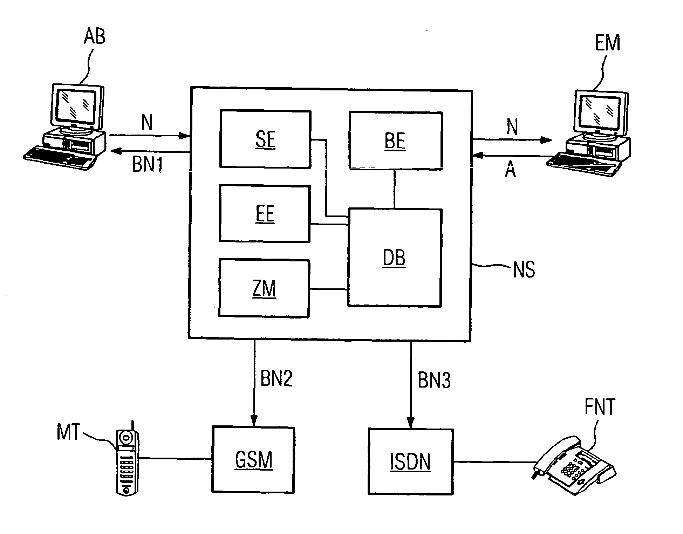

Dabei zeigt die einzige Figur in schematischer Darstellung eine Anordnung aus einem Nachrichtenserver, zwei Computern und Kommunikations-Endgeräten in öffentlichen Kommunikationsnetzwerken.

Die Figur zeigt einen Nachrichtenserver NS, der zum Senden, Empfangen und Zwischenspeichern elektronischer Nachrichten N, A eingerichtet ist. Bei dem Nachrichtenserver NS handelt es sich in dem vorliegenden Ausführungsbeispiel um einen Server eines Unified-Messaging-Systems, welches zur Verarbeitung von elektronischen Nachrichten verschiedener elektronischer Medien (hier: SMS, E-Mail, Telefax, Voice-Nachrichten) ausgestaltet ist. Der Nachrichtenserver NS verfügt dazu über eine Sendeeinrichtung SE und eine Empfangseinrichtung EE, welche mit entsprechenden Modulen (nicht dargestellt) zum Versenden und Empfangen der verschiedenen Nachrichten-Arten versehen sind. Zum Speichern von Kopien der gesendeten Nachrichten und zum Zwischenspeichern der empfangenen Nachrichten weist der Nachrichtenserver NS weiter eine Datenbank DB (Speichereinrichtung) auf. Im Unterschied zu den gebräuchlichen Servern in Unified-Messaging-Umgebungen weist der Nachrichtenserver NS weitere Module (Software-Module) zur Zuordnung von Benachrichtigungs-Aufträgen zu gespeicherten (gesendeten) elektronischen Nachrichten, nämlich das Zuordnungsmittel ZM, und eine Benachrichtigungseinrichtung BE, auf.

Der Nachrichtenserver ist zum Austausch der Nachrichten und anderer Daten mit Kommunikations-Endgeräten eingerichtet, die den einzelnen Benutzern zugeordnet sind. Als Kommunikations-Endgeräte sind in der Figur die Computer AB, EM ("Absender", "Empfänger"), das Festnetz-Telefon FNT, welches Bestandteil eines öffentlichen Kommunikationsnetzwerks ISDN ist, und das Mobiltelefon MT des öffentlichen Funknetzwerkes GSM dargestellt. Diese Kommunikations-Endgeräte AB, EM ,FNT, MT stehen dabei exemplarisch für eine beliebige Auswahl der verschiedensten Kommunikations-Endgeräte.

Im Folgenden wird beispielhaft das Versenden und Empfangen der Nachrichten N, A diskutiert. Die Nachrichten N, A sind in der Figur durch Pfeile dargestellt, wobei die Pfeilrichtung die Übertragungsrichtung des Nutzinhaltes der jeweiligen Nachricht angibt. Dasselbe gilt für die Benachrichtigungsmeldungen BN1, BN2, BN3. Die zum Versenden und Empfangen der Nachrichten N, A und der Benachrichtigungsmeldungen BN1, BN2, BN3 auszutauschenden Signalisierungs- und Protokollelemente entsprechen dem bei dem jeweiligen Übertragungsmedium üblichen Standard und werden aus Gründen der Übersichtlichkeit nicht weiter betrachtet.

Weiter ist anzumerken, dass im Rahmen dieses Ausführungsbeispiels das Versenden einer E-Mail-Nachricht als elektronische Nachricht und das Empfangen einer ebensolchen E-Mail-Nachricht als Antwortnachricht diskutiert wird. In analoger Weise können mit der gezeigten Anordnung und dem erläuterten Verfahren auch andere elektronische Nachrichten verarbeitet werden. So ist es insbesondere möglich, mit dem dargestellten Unified-Messaging-System Telefaxnachrichten zu versenden und zu empfangen, wobei diese Telefax-Nachrichten in ähnlicher Weise wie E-Mail-Nachrichten verwaltet werden und somit dem geschilderten Verfahren zugänglich sind.

Ein Benutzer des Computers AB versendet eine elektronische Nachricht N (E-Mail-Nachricht) an einen anderen Benutzer mit dem Computer EM. Dazu wird die fertig editierte elektronische Nachricht N von dem Computer AB zu dem Nachrichten-Server NS übermittelt, dort von der Empfangseinrichtung EE empfangen, und in der Datenbank DB zwischengespeichert. Die zwischengespeicherte elektronische Nachricht N wird dann sogleich oder zu einem späteren Zeitpunkt durch die Sendeinrichtung SE zu dem Computer EM übermittelt und dort angezeigt bzw. weiterverarbeitet. Selbstverständlich können zwischen dem Nachrichtenserver NS und dem Computer EM noch weitere Nachrichten-Server NS oder andere Server und Netzelemente angeordnet sein, welche die elektronische Nachricht N nach dem "Store-and-Forward"-Prinzip verarbeiten. Insbesondere ist es auch möglich, dass die elektronische Nachricht N in dem Nachrichten-Server NS oder in einem weiteren Server so lange zwischengespeichert wird, bis der Benutzer mit dem Computer EM oder einem anderen Kommunikationsendgerät den Abruf der zwischengespeicherten elektronischen Nachricht N veranlasst.

Der Benutzer des Computers AB hat für das Versenden der elektronischen Nachricht ein Kommunikationsprogramm, ein sog. E-Mail-Programm, verwendet. Dieses E-Mail-Programm ist neben einer Standard-Funktionalität mit einer Eingabemöglichkeit zur Eingabe eines Auftrages versehen. Im hier beschriebenen einfachsten Fall besteht dieses Eingabemittel aus einem grafisch dargestellten Kästchen, welches aktivierbar ("klickbar") ist für die Fälle, in denen der Benutzer des Computers AB bzw. des E-Mail-Programms eine Benachrichtigung für den Fall wünscht, in dem eine Antwortnachricht zu der versendeten elektronischen Nachricht N in dem Nachrichtenserver NS eintrifft. Das E-Mail-Programm umfasst weiterhin Eingabemittel, mit denen der Benutzer seinen Auftrag näher spezifizieren kann, beispielsweise zur Eingabe einer Kommunikationsadresse, an die zu der Benachrichtigung eine Benachrichtigungsmeldung BN1, BN2, BN3 verschickt werden soll. Diese benutzerspezifischen Einstellungen können entweder pauschal für alle mit einem entsprechenden Auftrag versehenen und versendeten elektronischen Nachrichten N gelten, oder aber - wie im vorliegenden Ausführungsbeispiel - separat für jede elektronische Nachricht N angewiesen werden.

Sofern der entsprechende Auftrag zur Benachrichtigung schon bei der Erstellung der elektronischen Nachricht N eingegeben wird, wird dieser Auftrag auch zusammen mit der elektronischen Nachricht N von dem Computer AB zu dem Nachrichten-Server NS übertragen und dort dem Zuordnungsmittel ZM zugeleitet. Es ist jedoch auch möglich, einen entsprechenden Auftrag nachträglich einer schon versendeten und in der Datenbank zwischengespeicherten (archivierten) elektronischen Nachricht N zuzuordnen. Ebenso ist es möglich, einen bereits erteilten Auftrag durch einen entsprechenden Zugriff auf das Zuordnungsmittel ZM und damit auf die Datenbank DB nachträglich zu ändern oder zu stornieren. Die versendeten elektronischen Nachrichten N werden als "Kopie" - wie bereits erwähnt - in der Datenbank DB archiviert. Jede elektronische Nachricht N besteht dazu aus einer Reihe von separat abgespeicherten Datenfeldern, wozu die Absenderadresse, die Empfängeradresse (hier: "N"), ein Datenfeld für den Betreff ("Betreffzeile"), der Textkörper der elektronischen Nachricht N und ggf. elektronische Dateianhänge ("Attachments") gehören. Für die Zwecke der Benachrichtigung wird mit jeder elektronischen Nachricht N zumindest ein weiteres Datenfeld gespeichert, nämlich ein sog. "Flag", welches bei seiner Aktivierung (Feldinhalt: logisches "Ein") das Bestehen eines entsprechenden Auftrages angibt. Weitere zusätzliche Datenfelder betreffen eine oder mehrere Kommunikationsadressen als Benachrichtigungs-Ziel und ggf. weitere Angaben, beispielsweise über das Benachrichtigungs-Medium (Telefonanruf, SMS-Nachricht, etc.). Alle diese zusätzlichen Datenfelder werden durch das Zuordnungsmittel ZM gemäß dem Auftrag verwaltet.

Die Benachrichtigungseinrichtung BE umfasst eine Überprüfungseinrichtung (nicht dargestellt). Diese nimmt zumindest im dem Fall, in dem in der Datenbank DB mindestens eine ausgegangene elektronische Nachricht N mit einem Auftrag zur Benachrichtigung versehen ist, eine Eingangskontrolle aller eingehenden elektronischen Nachrichten vor. Im Folgenden wird dazu die elektronische Nachricht A betrachtet, die von dem Computer EM aus an den Nachrichten-Server NS geleitet wird. Die Benachrichtigungseinrichtung BE überprüft dabei, ob die elektronische Nachricht A eine Antwortnachricht auf die elektronische Nachricht N ist, welche in Kopie und mit einem Auftrag versehen in der Datenbank DB gespeichert ist.

Für die Überprüfung können verschiedene Sachverhalte einzeln oder in Kombination miteinander ausgewertet werden, wobei im einfachsten Fall eine einzige Übereinstimmung zu einem positiven Ergebnis der Überprüfung führen kann. Um eine sichere Erkennung zu gewährleisten, werden im vorliegenden Ausführungsbeispiel jedoch mehrere Kriterien überprüft, von denen eine die Mehrzahl erfüllt sein muss, um als positives Überprüfungsergebnis interpretiert zu werden. Dazu werden hier einzelne Datenfelder der empfangenen elektronischen Nachricht A mit einzelnen Datenfeldern der gespeicherten elektronischen Nachricht N jeweils verglichen. Jeder Vergleich ergibt einen Grad der Übereinstimmung, der beispielsweise in einer Prozentzahl zwischen 0 und 100 ausgedrückt werden kann. Die bei den einzelnen Überprüfungsschritten erzielten Prozentzahlen werden dabei gewichtet und anschließend addiert, wobei beim Überschreiten eines Grenzwertes (beispielsweise 200) das Ergebnis der Überprüfung als positiv bewertet wird und somit eine Benachrichtigung des Absenders der elektronischen Nachricht N durch die Benachrichtigungseinrichtung BE veranlasst wird.

Im vorliegenden Fall überprüft die Benachrichtigungseinrichtung BE zuerst, ob der Absender der elektronischen Nachricht A zumindest einer der Empfänger der elektronischen Nachricht N ist. Dies geschieht im Bespiel der E-Mail-Nachrichten anhand der E-Mail-Adressen; bei Telefax-Nachrichten wird beispielsweise die Telefax-Rufnummer ausgewertet. Bei den E-Mail-Nachrichten wird weiterhin jeweils die Betreffzeile der elektronischen Nachrichten N, A miteinander verglichen, wobei üblicher Weise die Betreffzeilen nicht völlig miteinander übereinstimmen, weil Antwortnachrichten oft eine Betreffzeile aufweisen, die zwar der Betreffzeile der empfangenen elektronischen Nachricht N entspricht, aber der ein entsprechender Vermerk wie beispielsweise "AW:" ("Antwort:") vorangestellt ist. Daher wird hier von einer Übereinstimmung ausgegangen, wenn ein bestimmter Anteil zusammenhängender und "signifikanter" alphanumerischer Zeichen der jeweiligen Betreffzeilen übereinstimmen. Z.B. heißt die Antwortnachricht auf einen Nachricht "Hallo" oft "Re: Hallo", was als eine Übereinstimmung des signifikanten Anteils von 100% gewertet wird. Alternativ kann auch eine bestimmte Anzahl (beispielsweise 20), also ein vordefinierter Absolutwert, zusammenhängender alphanumerischer Zeichen der jeweiligen Betreffzeilen übereinstimmen. Ebenso macht sich das Verfahren zu Nutze, dass bei Antwortnachrichten im Fall der E-Mail-Nachrichten der Textkörper der ursprünglichen Nachricht oft in Form eines "Zitates" dem Textkörper der Antwort angehängt ist. Für den Vergleich der Textkörper werden in diesem Fall aus dem Textkörper der Antwortnachricht ggf. Zitatzeichen (beispielsweise ein Rechtspfeil mit einem Leerzeichen) zunächst entfernt, bevor ein Vergleich vorgenommen wird.

Darüber hinaus sind elektronische Nachrichten häufig mit eindeutigen Identifikationsnummern versehen, die üblicher Weise von einem versendenden Nachrichten-Server NS in einen sog. "Header" (oft auch als Internet-Kopfzeilen bezeichnet) eingefügt werden. Sofern diese Identifikationsnummern bei dem Erzeugen einer Antwort in die Antwortnachricht übernommen werden, stellen diese eine sehr gute Entscheidungsgrundlage für die Überprüfung dar.

Durch das vorstehend beschriebene "Ranking" wurde nun festgestellt, dass die elektronische Nachricht A tatsächlich eine Antwortnachricht auf die elektronische Nachricht N ist, so dass die Benachrichtigungseinrichtung BE nun eine auftragsgemäße Benachrichtigung mittels der Sendeeinrichtung SE in die Wege leitet. Der Benutzer, welcher die elektronische Nachricht N versendet hat, hat dabei spezifiziert, dass zur Benachrichtigung eine SMS an sein Mobiltelefon MT versendet werden soll, wobei die dazu verwendete SMS-Nachricht, also die Benachrichtigungs-Nachricht BN2, die ersten vierzig Zeichen der Betreffzeile der Antwortnachricht N und einen Hinweis nach der Art "Antwortnachricht eingetroffen!" umfassen soll. Alternativ kann natürlich auch eine Benachrichtigung mittels einer anderen elektronischen Echtzeit-Nachricht, nämlich eines sog. "User-Outcalls", also eines elektronisch erzeugten Telefonanrufes (Benachrichtigungsmeldung BN3), zu dem Festnetz-Telefon FNT erfolgen. Die Benachrichtigungsmeldung BN1 stellt hingegen eine E-Mail-Nachricht dar, die zu einer anderen E-Mail-Adresse des Benutzers, z. B. eine Privat-Adresse, versendet wird. Sie stellt dabei einen Kompromiss zwischen einer zeitnahen Benachrichtigung einerseits und einer wenig störenden Benachrichtigung andererseits dar.

Selbstverständlich kann ein Auftrag auch Zeitkriterien umfassen, die die unterschiedliche Erreichbarkeit eines Benutzers zu unterschiedlichen Tageszeiten o. ä. berücksichtigt, so dass je nach Uhrzeit/Wochentag eine andere der Benachrichtigungsmeldungen BN1, BN2, BN3 versendet wird.

## Patentansprüche

1. Nachrichtenserver (NS) zur Verarbeitung ausgehender und eingehender elektronischer Nachrichten (N, A),
mit einer Sendeeinrichtung (SE) zum Versenden der elektronischen Nachrichten (N, A),
mit einer Empfangseinrichtung (EE) zum Empfangen der elektronischen Nachrichten (N, A),
mit einer Benachrichtigungseinrichtung (BE) zum Versenden einer Benachrichtigungsmeldung (BN1, BN2, BN3) über den Empfang der elektronischen Nachrichten (N),
**dadurch gekennzeichnet, dass**
- der Nachrichtenserver (NS) ein Zuordnungsmittel (ZM) zur Zuordnung eines Auftrages zu einer versendeten oder zu versendenden elektronischen Nachricht (N) aufweist, wobei durch den Auftrag das Versenden der Benachrichtigungsmeldung (BN1, BN2, BN3) beim Empfang einer eingehenden Antwortnachricht zu dieser versendeten elektronischen Nachricht (N) vorsehbar ist,
- der Nachrichtenserver (NS) eine Überprüfungseinrichtung umfasst, die zur Überprüfung der eingehenden elektronischen Nachricht (A) eingerichtet ist, wobei durch die Überprüfung feststellbar ist, ob eine eingehende elektronische Nachricht (A) eine Antwortnachricht auf eine zuvor versendete und mit einem Auftrag versehenen elektronischen Nachricht (N) ist, und
- der Nachrichtenserver (NS) zum Versenden der Benachrichtigungsmeldungen (BN1, BN2, BN3) bei einem positiven Ergebnis der Überprüfung eingerichtet ist.

2. Nachrichtenserver (NS) nach Patentanspruch 1,
**dadurch gekennzeichnet, dass**
die elektronische Nachricht (N, A) eine E-Mail-Nachricht ist.

3. Nachrichtenserver (NS) nach einem der vorhergehenden Patentansprüche,
**dadurch gekennzeichnet, dass**
die Überprüfungseinrichtung zum Vergleich zumindest eines Teils der Betreffzeile der versendeten elektronischen Nachricht (N) mit zumindest einem Teil der Betreffzeile der empfangenen elektronischen Nachricht (A) eingerichtet ist.

4. Nachrichtenserver (NS) nach einem der vorhergehenden Patentansprüche,
**dadurch gekennzeichnet, dass**
die Überprüfungseinrichtung zum Vergleich zumindest eines Adressaten der versendeten elektronischen Nachricht (N) mit einer Absenderangabe der empfangenen elektronischen Nachricht (A) eingerichtet ist.

5. Nachrichtenserver (NS) nach einem der vorhergehenden Patentansprüche,
**dadurch gekennzeichnet, dass**
die Überprüfungseinrichtung zum Vergleich zumindest eines Teiles eines Textkörpers der versendeten elektronischen Nachricht (N) mit zumindest einem Teil eines Textkörpers der empfangenen elektronischen Nachricht (A) ausgebildet ist.

6. Nachrichtenserver (NS) nach einem der vorhergehenden Patentansprüche,
**dadurch gekennzeichnet, dass**
der der versendeten elektronischen Nachricht (N) zugeordnete Auftrag eine Angabe über die Art der Benachrichtigung und/oder eine Ziel-Kommunikationsadresse für die Benachrichtigung umfasst.

7. Nachrichtenserver (NS) nach einem der vorhergehenden Patentansprüche,
**dadurch gekennzeichnet, dass**
die Benachrichtigungsmeldung (BN2, BN3) eine elektronische Echtzeit-Nachricht ist.

8. Nachrichtenserver (NS) nach einem der vorhergehenden Patentansprüche,
**dadurch gekennzeichnet, dass**
die Benachrichtigungseinrichtung (BE) zur Erzeugung eines automatischen Telefonanrufs an einen Benutzer als Benachrichtigungsmeldung (BN3) eingerichtet ist.

9. Nachrichtenserver (NS) nach einem der vorhergehenden Patentansprüche,
**dadurch gekennzeichnet, dass**
die Benachrichtigungseinrichtung (BE) zur Erzeugung und zum Versenden einer textbasierten Nachricht als Benachrichtigungsmeldung (BN1, BN2) eingerichtet ist.

10. Nachrichtenserver (NS) nach Patentanspruch 9,
**dadurch gekennzeichnet, dass**
die textbasierte Nachricht eine SMS-Nachricht oder eine E-Mail-Nachricht ist.

11. Nachrichtenserver (NS) nach einem der vorhergehenden Patentansprüche,
**dadurch gekennzeichnet, dass**
die Benachrichtigungsmeldung (BN1, BN2, BN3) zumindest einen Teil einer Betreffzeile und/oder eines Textkörpers der Antwortnachricht umfasst.

12. Nachrichtenserver (NS) nach einem der vorhergehenden Patentansprüche,
**dadurch gekennzeichnet, dass**
das Zuordnungsmittel (ZM) zur Zuordnung und/oder zur Änderung des Auftrages vor der Versendung, während des Versendens und/oder nach dem Versenden der versendeten Nachricht (N) eingerichtet ist.

13. Nachrichtenserver (NS) nach einem der vorhergehenden Patentansprüche,
**dadurch gekennzeichnet, dass**
der Nachrichtenserver (NS) ein E-Mail-Server oder ein Unified-Messaging-System ist.

14. Verfahren zur Benachrichtigung eines Benutzers über den Eingang einer elektronischen Nachricht (A),
wobei bei Eingang der elektronischen Nachricht (A) eine Benachrichtigungsmeldung (BN1, BN2, BN3) an den Benutzer versendet wird,
**dadurch gekennzeichnet, dass**
- in einem ersten Schritt eine elektronische Nachricht (N) erstellt wird,
- in einem zweiten Schritt der erstellten elektronischen Nachricht (N) ein Auftrag zur Benachrichtigung über eine zukünftig eingehende Antwortnachricht zugeordnet wird,
- in einem-dritten Schritt die elektronische Nachricht (N) versendet wird,
- in einem vierten Schritt eine weitere elektronische Nachricht (A) empfangen wird,
- in einem fünften Schritt für die empfangene weitere elektronische Nachricht (A) überprüft wird, ob diese eine Antwortnachricht zu der versendeten und mit dem Auftrag versehenen elektronischen Nachricht (N) ist, und
- in einem sechsten Schritt bei einem positiven Überprüfungsergebnis des fünften Schritts eine dem Auftrag entsprechende Benachrichtigungsmeldung (BN1, BN2, BN3) versendet wird.

## Claims

1. Message server (NS) for processing outgoing and incoming electronic messages (N, A), with a transmission facility (SE) for sending the electronic messages (N, A), with a receiving facility (EE) for receiving the electronic messages (N, A), with a notification facility (BE) for sending a notification message (BN1, BN2, BN3) about the receipt of the electronic messages (N), **characterized in that**
- the message server (NS) has an allocation means (ZM) for allocating a instruction to an electronic message (N) which has been sent or is to be sent, this instruction enabling provision of the sending of the notification message (BN1, BN2, BN3) on the receipt of an incoming reply message to this sent electronic message (N),
- the message server (NS) includes a checking facility, which is set up to check the incoming electronic message (A), the check enabling it to be determined whether an incoming electronic message (A) is a reply message to a previously sent electronic message (N) which is equipped with a instruction, and
- the message server (NS) is set up to send the notification messages (BN1, BN2, BN3) in the event of a positive result of the check.

2. Message server (NS) according to claim 1, **characterized in that** the electronic message (N, A) is an email message.

3. Message server (NS) according to one of the preceding claims, **characterized in that** the checking facility is set up to compare at least part of the subject line of the sent electronic message (N) with at least part of the subject line of the received electronic message (A).

4. Message server (NS) according to one of the preceding claims, **characterized in that** the checking facility is set up to compare at least one addressee of the sent electronic message (N) with a sender entry of the received electronic message (A).

5. Message server (NS) according to one of the preceding claims, **characterized in that** the checking facility is developed to compare at least part of a body text of the sent electronic message (N) with at least part of a body text of the received electronic message (A).

6. Message server (NS) according to one of the preceding claims, **characterized in that** the instruction allocated to the sent electronic message (N) includes details of the nature of the notification and/or a destination communication address for the notification.

7. Message server (NS) according to one of the preceding claims, **characterized in that** the notification message (BN2, BN3) is an electronic real-time message.

8. Message server (NS) according to one of the preceding claims, **characterized in that** the notification facility (BE) is set up to generate an automatic phone call to a user as a notification message (BN3).

9. Message server (NS) according to one of the preceding claims, **characterized in that** the notification facility (BE) is set up to generate and send a text-based message as a notification message (BN1, BN2).

10. Message server (NS) according to claim 9, **characterized in that** the text-based message is an SMS message or an email message.

11. Message server (NS) according to one of the preceding claims, **characterized in that** the notification message (BN1, BN2, BN3) includes at least part of a subject line and/or of a body text of the reply message.

12. Message server (NS) according to one of the preceding claims, **characterized in that** the allocation means (ZM) is set up to allocate and/or change the instruction before sending, during sending and/or after sending of the message (N) that is sent.

13. Message server (NS) according to one of the preceding claims, **characterized in that** the message server (NS) is an email server or a unified messaging system.

14. Method for notification of a user about the delivery of an electronic message (A), a notification message (BN1, BN2, BN3) being sent to the user upon delivery of the electronic message (A), **characterized in that**
- in a first step an electronic message (N) is created,
- in a second step the created electronic message (N) is allocated a instruction for notification about a future incoming reply message,
- in a third step the electronic message (N) is sent,
- in a fourth step a further electronic message (A) is received,
- in a fifth step the received further electronic message (A) is checked to establish whether this is a reply message to the electronic message (N) which was sent equipped with the instruction, and
- in a sixth step, if the result of the check in the fifth step is positive, a notification message (BN1, BN2, BN3) corresponding to the instruction is sent.

## Revendications

1. Serveur de messages (NS) pour le traitement de messages électroniques (N, A) sortants et entrants,
ayant un dispositif émetteur (SE) pour l'émission des messages électroniques (N, A),
ayant un dispositif de réception (EE) pour la réception des messages électroniques (N, A),
ayant un dispositif d'information (BE) pour l'émission d'un message d'information (BN1, BN2, BN3) concernant la réception des messages électroniques (N),
**caractérisé par le fait que**
- le serveur de messages (NS) comporte un moyen d'association (ZM) pour l'association d'une tâche à un message électronique (N) émis ou à émettre, la tâche permettant de prévoir l'émission du message d'information (BN1, BN2, BN3) lors de la réception d'un message de réponse entrant suite à ce message électronique émis (N),
- le serveur de messages (NS) comprend un dispositif de vérification qui est conçu pour vérifier le message électronique entrant (A), la vérification permettant de déterminer si un message électronique entrant (A) est un message de réponse à un message électronique (N) émis précédemment et muni d'une tâche, et
- le serveur de messages (NS) est conçu pour l'émission des messages d'information (BN1, BN2, BN3) si la vérification a eu un résultat positif.

2. Serveur de messages (NS) selon la revendication 1,
**caractérisé par le fait que** le message électronique (N, A) est un courrier électronique.

3. Serveur de messages (NS) selon l'une des revendications précédentes,
**caractérisé par le fait que** le dispositif de vérification est conçu pour la comparaison d'au moins une partie de la ligne d'objet du message électronique émis (N) à au moins une partie de la ligne d'objet du message électronique reçu (A).

4. Serveur de messages (NS) selon l'une des revendications précédentes,
**caractérisé par le fait que** le dispositif de vérification est conçu pour la comparaison d'au moins un destinataire du message électronique émis (N) à une indication d'expéditeur du message électronique reçu (A).

5. Serveur de messages (NS) selon l'une des revendications précédentes,
**caractérisé par le fait que** le dispositif de vérification est conçu pour la comparaison d'au moins une partie d'un corps de texte du message électronique émis (N) à au moins une partie d'un corps de texte du message électronique reçu (A).

6. Serveur de messages (NS) selon l'une des revendications précédentes,
**caractérisé par le fait que** la tâche associée au message électronique émis (N) comprend une indication sur le type de l'information et/ou une adresse de communication de destination pour l'information.

7. Serveur de messages (NS) selon l'une des revendications précédentes,
**caractérisé par le fait que** le message d'information (BN2, BN3) est un message électronique en temps réel.

8. Serveur de messages (NS) selon l'une des revendications précédentes,
**caractérisé par le fait que** le dispositif d'information (BE) est conçu pour produire comme message d'information (BN3) un appel téléphonique automatique à un utilisateur.

9. Serveur de messages (NS) selon l'une des revendications précédentes,
**caractérisé par le fait que** le dispositif d'information (BE) est conçu pour produire et émettre comme message d'information (BN1, BN2) un message à base de texte.

10. Serveur de messages (NS) selon la revendication 9,
**caractérisé par le fait que** le message à base de texte est un message court (SMS) ou un courrier électronique.

11. Serveur de messages (NS) selon l'une des revendications précédentes,
**caractérisé par le fait que** le message d'information (BN1, BN2, BN3) comprend au moins une partie de la ligne d'objet et/ou d'un corps de texte du message de réponse.

12. Serveur de messages (NS) selon l'une des revendications précédentes,
**caractérisé par le fait que** le moyen d'association (ZM) est conçu pour associer et/ou modifier la tâche avant l'émission, pendant l'émission et/ou après l'émission du message émis (N).

13. Serveur de messages (NS) selon l'une des revendications précédentes,
**caractérisé par le fait que** le serveur de messages (NS) est un serveur de courrier électronique ou un système de messagerie unifiée.

14. Procédé pour informer un utilisateur de l'arrivée d'un message électronique (A),
un message d'information (BN1, BN2, BN3) étant envoyé à l'utilisateur à l'arrivée du message électronique (A),
**caractérisé par le fait que**
- dans une première étape, on élabore un message électronique (N),
- dans une deuxième étape, on associe au message électronique élaboré (N) une tâche pour informer d'un message de réponse futur entrant,
- dans une troisième étape, on envoie le message électronique (N),
- dans une quatrième étape, on reçoit un autre message électronique (A),
- dans une cinquième étape, on vérifie pour l'autre message électronique reçu (A) s'il s'agit d'un message de réponse au message électronique (N) muni d'une tâche et envoyé, et
- dans une sixième étape, si la cinquième étape a donné un résultat de vérification positif, on envoie un message d'information (BN1, BN2, BN3) correspondant à la tâche.
